# EUROPEAN PATENT APPLICATION

(11) **EP 4 656 808 A1**
(43) Date of publication of application: **03.12.2025**
(21) Application number: 25175918.9
(22) Date of filing: 13.05.2025
(51) Int. Cl.: E02F 9/20, E02F 9/26

(54) **METHOD AND DEVICE FOR CONTROLLING BRAKE INCLUDED IN EXCAVATOR**

(30) Priority: 28.05.2024 KR 20240069551
(71) Applicant: Volvo Construction Equipment AB, 631 85 Eskilstuna (SE)
(72) Inventor: KIM, Sung Su, 51710 GYEONGSANGNAM-DO (KR); LEE, Chan Ho, 51710 GYEONGSANGNAM-DO (KR)
(74) Representative: Kransell & Wennborg KB

(57) **Abstract**

According to an embodiment, disclosed are obtaining apparatus status information including weight information and position information for one or more working apparatuses including at least one of a boom, an arm, and a bucket included in the excavator; obtaining a demand for controlling an electric motor that provides power to movement of one or more working apparatuses; determining a motor torque value for the electric motor as the demand is obtained; determining a standby torque value required for the one or more working apparatuses to maintain current position state by using the apparatus status information; determining a brake release timing for releasing the brake that restricts the movement of the one or more working apparatuses based on a comparison result of the motor torque value and the standby torque value; and a method for controlling the one or more working apparatuses according to the demand by releasing the brake based on the brake release timing, and a device and a recording medium for practicing the method.

## Description

### FIELD OF THE INVENTION

The technical field of the present disclosure relates to a method and device for controlling a brake included in an excavator, and relates to a technical field for preventing falling and sagging phenomenon of working apparatuses included in the excavator by obtaining a torque value of an electric motor required to maintain current position state of the working apparatus included in the excavator and a torque value of the electric motor to determine an appropriate brake release timing of the excavator.

### Technology behind the invention

In the past, there was a problem that when the brakes of working apparatuses such as booms, arms, and buckets included in excavators were released, the torque value due to the self-weight of the working apparatus was not taken into consideration, resulting in unintended falling and sagging of the working apparatus. In particular, there is a demand for a way of controlling the brakes included in an excavator with more precise technical elements, since the brakes are released before the torque value for the electric motor used in the excavator reaches a torque value sufficient to support the weight of the working apparatus.

Accordingly, a control method is required with a specific brake release timing that can prevent the falling and lowering of working apparatus of the excavator through a comparison result of the torque value for maintaining the current position state of the working apparatus of the excavator and the torque value for the electric motor.

### Prior Art

### Patent Document

Korean Patent Publication No. 10-2021-0143534 (November 29, 2021), Excavator Bucket Automatic Position Control Method

### SUMMARY OF THE INVENTION

### Problems to be solved

In order to solve the above-described problems, the present disclosure discloses a method and device for controlling a brake included in an excavator by using a standby torque value required for a working apparatus of the excavator to maintain a current position state, and discloses a method for determining and controlling an appropriate brake release timing for restricting movement of the working apparatus by comparing a torque value for an electric motor that provides power to the working apparatus of the excavator with a standby torque value.

The problems to be solved in the present disclosure are not limited to the problems mentioned above, and other problems not mentioned will be clearly understood by those skilled in the art from the description below.

### Means of solving the problems

As a technical means for achieving the above-described technical tasks, a method for controlling a brake included in an excavator according to a first aspect of the present disclosure may comprise: obtaining apparatus status information including weight information and position information for one or more working apparatuses including at least one of a boom, an arm, and a bucket included in the excavator; obtaining a demand for controlling an electric motor that provides power to movement of the one or more working apparatuses; determining a motor torque value for the electric motor as the demand is obtained; determining a standby torque value required for the one or more working apparatuses to maintain current position state by using the apparatus status information; determining a brake release timing for releasing the brake that restricts the movement of the one or more working apparatuses based on a comparison result of the motor torque value and the standby torque value; and controlling the one or more working apparatuses according to the demand by releasing the brake based on the brake release timing.

Optionally, in some examples, the electric motor and the brake may be included in an Electro Mechanical Actuator (EMA) that performs conversion of rotary motion into linear motion, and the type of the EMA may include either a screw type or a rack and pinion type.

Optionally, in some examples, the obtaining the demand may comprise: obtaining a joystick intensity signal determined according to a joystick tilt for controlling movement of the one or more working apparatuses; and obtaining the demand for controlling the electric motor according to the joystick intensity signal.

Optionally, in some examples, the method may further comprise obtaining a demand occurrence time which represents a time at which the demand is generated as the demand is obtained, and the demand occurrence time may be a time at which the brake is restricting movement of the one or more working apparatuses.

Optionally, in some examples, the determining the motor torque value may comprise determining the motor torque value in proportion to the amount of current that the demand applies to the electric motor from the time of demand generation; and between the time of demand generation and the time of brake release, the number of revolutions of the electric motor may be maintained at zero as the motor torque value increases.

Optionally, in some examples, the determining the standby torque value may comprise: obtaining current position information corresponding to the current position state of the one or more working apparatuses; and determining the standby torque value based on the current position information and the weight information; and the current position information may include center of gravity information of the one or more working apparatuses.

Optionally, in some examples, the comparison result may be determined based on whether a torque proximity, which indicates how close the motor torque value is to the standby torque value, falls within a preset proximity range, and if the comparison result indicates that the brake can be released, the brake release timing may be determined.

Optionally, in some examples, the determining the brake release timing comprises obtaining a dead band range representing unintentional movement of the one or more working apparatuses within a range of the joystick tilt, wherein the dead band range can include positive and negative values for the joystick tilt.

Optionally, in some examples, the brake release timing may be a time at which the joystick tilt does not fall within the dead band range.

Optionally, in some examples, the motor torque value according to the demand may be increased even if the joystick tilt falls within the dead band range.

A device for controlling a brake included in an excavator according to a second aspect of the present disclosure may comprise: a receiving unit for obtaining apparatus status information including weight information and position information for one or more working apparatuses including at least one of a boom, an arm, and a bucket included in the excavator and for obtaining a demand for controlling an electric motor that provides power to movement of the one or more working apparatuses; a processor for determining a motor torque value for the electric motor as the demand is obtained, for determining a standby torque value required for the one or more working apparatuses to maintain current position state by using the apparatus status information and for determining a brake release timing for releasing the brake that restricts the movement of the one or more working apparatuses based on a comparison result of the motor torque value and the standby torque value; and a control unit for controlling the one or more working apparatuses according to the demand by releasing the brake based on the brake release timing.

Optionally, in some examples, a third aspect of the present disclosure may provide a computer-readable recording medium on which a program for executing the method of the first aspect on a computer is recorded. Any one of the disclosed aspects, examples and claims may be suitably combined with one another as would be apparent to those skilled in the art. Additional features and advantages are set forth in the following description, claims, and drawings, and in part will be readily apparent to those skilled in the art from the foregoing or may be appreciated by practicing the disclosure as described herein. Furthermore, disclosed are computer systems, control units, code modules, computer-implemented methods, computer-readable medium and computer program products associated with the aforementioned technical advantages.

Optionally, in some examples, a fourth aspect of the present disclosure may provide a computer program product comprising program codes for performing the method of the first aspect.

### EFFECT OF THE INVENTION

According to one embodiment of the present disclosure, by comparing a motor torque value for an electric motor used in an excavator with a standby torque value required for the working apparatus to maintain the current position state and determining a time to release the brake, there is an effect of preventing unintentional falling and sagging of the working apparatus of the excavator due to the self-weight of the working apparatus.

In addition, the brake is precisely controlled by determining the time to release the brake by utilizing the dead band range that indicates unintended movement among the range of the tilt of the joystick included in the excavator, thereby increasing stability.

The effects of the present disclosure are not limited to the effects mentioned above, and other effects not mentioned will be clearly understood by those skilled in the art from the description below.

### Brief description of the drawings

FIG. 1 is a schematic diagram showing an example of a configuration of a device according to one embodiment.
FIG. 2 is a flow chart illustrating a method in which a device according to an embodiment operates.
FIG. 3 is a drawing illustrating an example of a device controlling an electric motor and a brake used for movement of one or more working apparatuses included in an excavator according to one embodiment.
FIG. 4 is a drawing schematically illustrating an example in which a device determines a standby torque value required for one or more working apparatuses included in an excavator to maintain current position state according to one embodiment.
FIG. 5 is a drawing illustrating an example in which a device determines a brake release timing based on demand acquired over time, the number of revolutions of an electric motor, a motor torque value, and a standby torque value according to one embodiment.
FIG. 6 is a drawing illustrating an example of a dead band range for a joystick used to control the movement of one or more working apparatuses included in an excavator according to one embodiment.
FIG. 7 is a drawing illustrating an example of a process in which a device releases a brake to control one or more working apparatuses according to one embodiment.
FIG. 8 is a drawing illustrating an example in which an analysis unit included in a device performs analysis using demand, the number of revolutions of an electric motor, standby torque value, and height value for a working apparatus according to one embodiment.
FIG. 9 is a drawing illustrating an example of a process in which a device provides a user device with a process for controlling a brake included in an excavator according to one embodiment.

### DETAILED DESCRIPTION OF THE INVENTION

The advantages and features and the methods for achieving them in the present disclosure will become apparent with reference to the embodiments described below in detail together with the accompanying drawings. However, the present disclosure is not limited to the embodiments disclosed below and may be implemented in various different forms, and the present embodiments are provided only to make the disclosure complete and fully inform those skilled in the art of the scope of the present disclosure.

The terms used herein are for the purpose of describing embodiments only and are not intended to limit the present disclosure. In this specification, singular forms also include plural forms unless specifically stated otherwise in the text. The terms "comprises" and/or "comprising" used in the specification do not exclude the presence or addition of one or more other components other than the components stated. Like reference numerals throughout the specification refer to like components, and "and/or" includes each and every combination of one or more of the mentioned components. Although "first", "second", and the like are used to describe various components, these components are, of course, not limited by these terms. These terms are only used to distinguish one component from another. Accordingly, it goes without saying that the first component mentioned below may also be the second component within the technical concept of the present disclosure.

Unless otherwise defined, all terms (including technical and scientific terms) used in the present specification may be used in a meaning commonly understood by those skilled in the art. Additionally, terms defined in commonly used dictionaries are not to be interpreted ideally or excessively unless explicitly and specifically defined otherwise.

Spatially relative terms such as "below," "beneath," "lower," "above," and "upper" may be used to easily describe the relationship of one component to other components as illustrated in the drawings. Spatially relative terms should be understood to include different orientations of components when in use or operation in addition to the orientations depicted in the drawings. For example, when components depicted in a drawing are flipped, a component described as "below" or "beneath" another component may end up being placed "above" the another component. Thus, the exemplary term "below" may include both downward and upward directions. Components may also be oriented in different directions, and thus spatially relative terms may be interpreted according to their orientation.

Hereinafter, various embodiments will be described in detail with reference to the drawings.

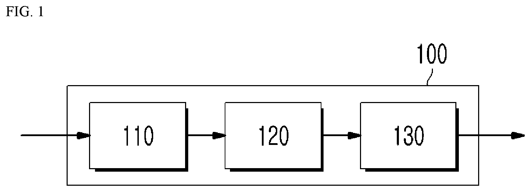

FIG. 1 is a schematic diagram showing an example of a configuration of a device 100 according to one embodiment.

Referring to FIG. 1, the device 100 may include a receiving unit 110, a processor 120, and a control unit 130. However, not all of the components illustrated in FIG. 1 are essential components of the device 100. The device 100 may be implemented with more components than those illustrated in FIG. 1, or the device 100 may be implemented with fewer components than those illustrated in FIG. 1.

For example, the device 100 according to an embodiment may further include a memory (not shown). As another example, the control unit 130 according to an embodiment may include a display (not shown).

The device 100 according to an embodiment represents a computing device capable of determining an operation pattern or an operation pattern group of an excavator, and in an embodiment, may be implemented as a desktop PC, a tablet, a laptop, or the like, or may be implemented as a computing device such as a smartphone. The device 100 according to an embodiment may be included inside the excavator or may be located outside the excavator, such as on a server.

According to one embodiment, a receiving unit 110 obtains apparatus status information including weight information and position information for working apparatus of each of a boom, an arm, and a bucket included in an excavator over time.

The receiving unit 110 according to an embodiment obtains a demand from a user's input or operation to control an electric motor that provides power to the movement of one or more working apparatuses.

The demand according to one embodiment may correspond to a joystick control signal or signaling delivered to an electric motor for driving any one of the upper body, boom, arm and bucket of the excavator.

The processor 120 according to one embodiment determines a motor torque value for an electric motor as a demand is obtained from a receiving unit 110.

The processor 120 according to one embodiment uses apparatus status information obtained from a receiving unit 110 to determine a standby torque value required for one or more working apparatuses to maintain current position state over time.

The processor 120 according to one embodiment determines a brake release timing for releasing a brake that restricts movement of one or more working apparatuses based on a comparison result between a determined motor torque value and a determined standby torque value.

A control unit 130 according to one embodiment releases the brake based on the brake release timing and controls one or more working apparatuses according to the received demand.

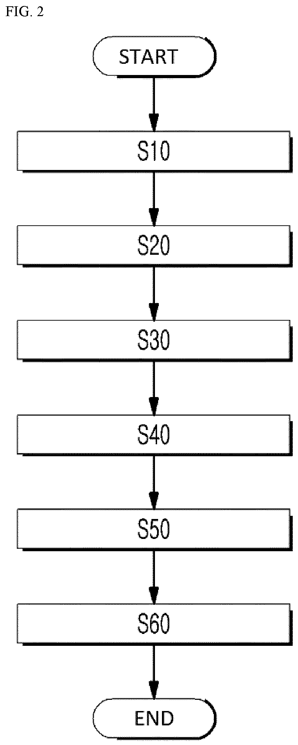

For a more specific operation method of the device 100, the contents of FIG. 2 and below may be referred.

FIG. 2 is a flow chart illustrating a method in which a device 100 according to an embodiment operates.

Referring to step S10, the device 100 according to one embodiment obtains apparatus status information including weight information and position information for one or more working apparatuses including at least one of a boom, an arm, and a bucket included in an excavator.

As an example, when the operation status of an excavator is in a non-operating state, the device 100 may obtain apparatus status information for one or more working apparatuses. In detail, an non-operating condition may mean a condition in which the brakes included in the excavator restrict the movement of one or more working apparatuses. Accordingly, the device 100, including soil (e.g., silt) contained in one working apparatus (e.g., bucket), may obtain apparatus status information including weight information thereon.

As an example, the device 100 may obtain different apparatus status information for each of the boom, arm, and bucket included in the excavator from sensors. Specifically, the device 100 may obtain weight information for the boom (e.g., 3 tons), weight information for the arm (e.g., 2 tons), and weight information for the bucket (e.g., 1 ton) for each apparatus status information. Furthermore, each apparatus status information may include position information for each working apparatus, and the device 100 may obtain location information corresponding to each working apparatus in the form of coordinates (e.g., x-axis, y-axis, z-axis).

As another example, position information for one or more working apparatuses can be measured from an inertial measurement unit (IMU) for each of the boom 311, arm 321, and bucket 331 included in the excavator. The IMU may include an acceleration sensor, an angular rate sensor (gyroscope), and, if necessary, a magnetometer and additional sensors to measure position information for each working apparatus. For example, when the lever demand is 0, the device 100 may calculate the force acting in the direction of gravity on each of the boom 311, the arm 321, and the bucket 331 from one or more acceleration sensors to calculate the angles of inclination in the direction of each of the X, Y, and Z axes. Based on the calculated angles, the device 100 may obtain initial position information for each working apparatus corresponding to the movement using the angular rate sensor included in the IMU.

Without being limited thereto, the device 100 may additionally obtain apparatus status information, which is used to determine the standby torque value required for one or more working apparatuses to maintain the current position state, using additional sensors or from user selection input.

Referring to step S20, the device 100 according to one embodiment obtains a demand for controlling an electric motor that provides power to the movement of one or more working apparatuses.

The device 100 according to one embodiment may be controlled with different electric motors for each working apparatus included in the excavator. In detail, the larger the weight included in the weight information for each working apparatus, the more the device 100 can control the movement of each working apparatus by providing different power using an electric motor that accomodates a demand with large value.

The device 100 according to one embodiment may obtain a demand from a user's input. In detail, the device 100 may obtain a demand (e.g., 10%) that allows the user to directly control an electric motor that provides power to one or more devices included in the excavator using a joystick (or a lever). As another example, the device 100 may remotely obtain a demand for controlling an electric motor for each working apparatus from a user using a communication device.

Without being limited thereto, the device 100 may obtain a corresponding demand by installing one or more apparatuses obvious to those skilled in the art to control an electric motor that provides power to the movement of one or more working apparatuses included in the excavator.

Referring to step S30, the device 100 according to one embodiment determines a motor torque value for an electric motor as a demand is obtained.

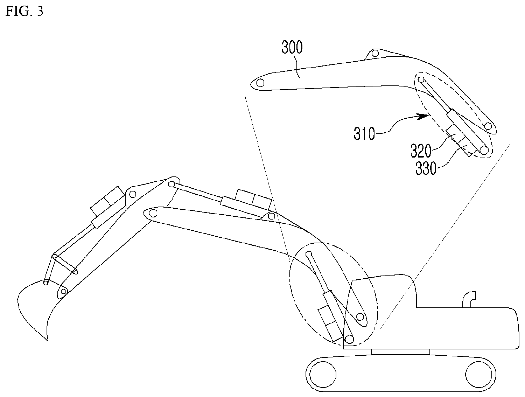

FIG. 3 is a drawing illustrating an example of a device 100 controlling an electric motor 320 and a brake 330 used for movement of one or more working apparatuses included in an excavator according to one embodiment.

The device 100 according to one embodiment may determine a motor torque value in proportion to the amount of current that a demand applies to an electric motor from the time of demand generation, and between the time of demand generation and the time of brake release, the number of revolutions of the electric motor may be maintained at zero as the motor torque value increases.

Referring to FIG. 3, each of one or more working apparatuses, a boom 300, an arm and a bucket, may include an actuator 310 including an electric motor 320 and a brake 330. In detail, the device 100 may provide power for the movement of the boom 300 to the electric motor 320 included in the actuator 310 to obtain a motor torque value (e.g., 30 Nm) and restrict the movement of the boom 300 using the brake. Without being limited thereto, different actuators 310 may be used for each working apparatus, and for example, a mixture of hydraulic actuators and electric actuators may be used for each working apparatus.

The electric motor 320 and the brake 330 according to one embodiment may be included in an EMA (Electro Mechanical Actuator) that converts rotary motion into linear motion, and the type of the EMA may be any one of a screw type or a rack and pinion type.

In detail, as demand is obtained, current is applied to the electric motor 320 and the amount of current increases, so that the device 100 may obtain a corresponding motor torque value. However, in one embodiment, after the demand is generated, the device 100 may increase the motor torque value for the electric motor 320 while maintaining the number of revolutions of the electric motor at zero even when the demand is obtained so that hat the motor torque value approaches the standby torque value.

On the other hand, after the brake release timing, as demand is obtained, the number of revolutions of the electric motor increases and linear motion (e.g. boom up or boom down) may be performed for each working apparatus included in the excavator by the EMA which performs the conversion of rotational operation into linear motion. In other words, if the demand corresponding to the boom 300 is a positive value, the rotation of the electric motor 320 can be boomed up by the motor torque value according to the movement in a first direction, or if the obtained demand is a negative value, the rotation of the electric motor 320 can be boomed down by the motor torque value according to the movement in a second direction opposite to the first direction. Accordingly, the device 100 may control one or more working apparatuses using EMA by increasing the number of revolutions of the electric motor in each direction and converting it into linear motion.

Referring to step S40, the device 100 according to one embodiment determines a standby torque value required for one or more working apparatuses to maintain current position state using apparatus status information.

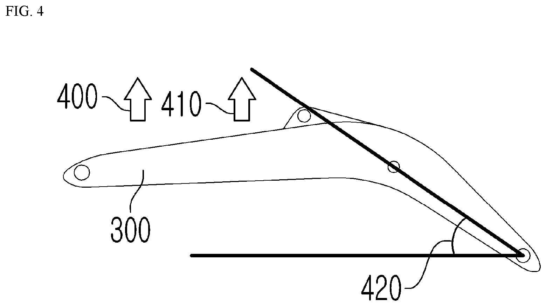

FIG. 4 is a drawing schematically illustrating an example in which a device 100 determines a standby torque value 410 required for one or more working apparatuses included in an excavator to maintain current position state according to one embodiment.

Referring to FIG. 4, the device 100 may obtain apparatus status information including weight information and position information corresponding to the boom and determine a standby torque value 410 required to maintain the current position state.

The device 100 according to one embodiment may obtain current position information corresponding to the current position state of one or more working apparatuses, and determine a standby torque value 410 based on the current position information and weight information. Furthermore, the current position information may include center of gravity information of one or more working apparatuses.

In detail, the device 100 may obtain weight information (e.g., 1 ton) which is apparatus status information for the boom 300 and current position information (e.g., 5, 10, 15) in the form of X, Y and Z axes corresponding to the current point in time, and may also include angle information including an angle 420 of the working apparatus as needed. Accordingly, the device 100 may determine a standby torque value 410 (e.g., 50 Nm) required to maintain the current position state by using the center of gravity information and weight information for the boom. In other words, the device 100 may determine a brake release timing for releasing the brake 330 that restricts one or more movements based on a comparison result between a motor torque value 400 for the electric motor 320 and a standby torque value 410 required to maintain the current position state as demand is obtained. The standby torque value 410 may be determined as different standby torque value 410 for each working apparatus, and the device 100 may also update the standby torque value 410 as the center of gravity information is updated. A detailed explanation of this is described later in step S50.

Referring to step S50, the device 100 according to one embodiment determines a brake release timing to release a brake 330 that restricts movement of one or more working apparatuses based on a comparison result between a motor torque value 400 and a standby torque value 410.

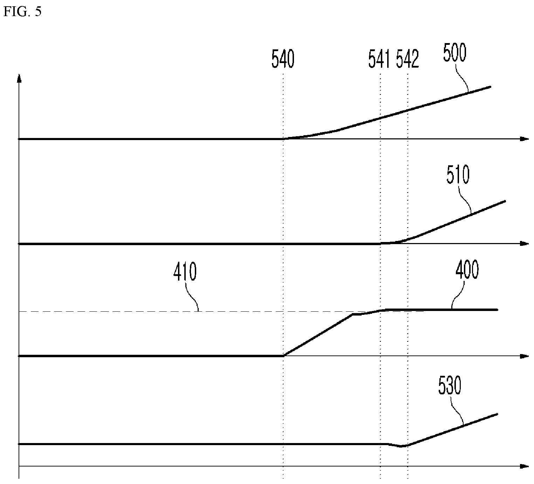

FIG. 5 is a drawing illustrating an example in which a device 100 determines a brake release timing 541 based on demand 500 obtained over time, the number of revolutions 510 of an electric motor, a motor torque value 400, and a standby torque value 410 according to one embodiment.

The device 100 according to one embodiment may obtain a joystick intensity signal determined according to a joystick tilt for controlling movement of one or more working apparatuses and may obtain a demand 500 for controlling an electric motor 320 according to the joystick intensity signal. Furthermore, as the demand 500 is obtained, a demand occurrence timing 540 indicating the time at which the demand 500 is generated can be obtained.

Referring to FIG. 5, it can be seen that the device 100 restricts the movement of one or more working apparatuses (e.g., a boom) using the brake 330 until a demand occurrence timing 540 at which the angle of the joystick is not detected. The device 100 may obtain a joystick intensity signal determined according to a joystick tilt (e.g., +10 degrees or boom up) for the joystick as the movement of the joystick is detected, and may obtain a demand 500 (e.g., +20%) for controlling an electric motor 320 corresponding thereto and a demand occurrence timing 540 (e.g., T1). After the demand occurrence timing 540, it can be seen that the device 100 increases the motor torque value 400 by increasing the demand 500 and the amount of current applied to the electric motor according to the demand 500, but the number of revolutions 510 of the electric motor is maintained at zero until the brake is released. It should be noted that even though a demand 500 is generated after the demand occurrence timing 540, the device 100 can be seen restricting the movement of one or more working apparatuses by using the brake 330.

The comparison result according to one embodiment may be determined based on whether a torque proximity, which indicates how close the motor torque value 400 is to the standby torque value 410, falls within a preset proximity range, and if the comparison result indicates that the brake can be released, the brake release timing 541 can be determined.

Referring to FIG. 5, the device 100 may obtain a comparison result that the brake can be released if the torque proximity (e.g., less than 5%) determined by comparing the motor torque value 400 (e.g., 50 Nm) obtained over time with the standby torque value 410 (e.g., 55 Nm) falls within the preset proximity range (e.g., 0 to 5%). Accordingly, at the brake release timing 541, the device 100 can release the brake 330 that restricts the movement of one or more working apparatuses, and since the motor torque value 400 is already close to the standby torque value 410 required for one or more working apparatuses to maintain the current position state, it can be seen that the height value 530 for the working apparatus that appears after the brake release timing 541 is maintained by minimizing falling or sagging.

In addition, at the torque formation timing 542, which indicates the time at which the motor torque value 400 (e.g., 56 Nm) becomes higher than the standby torque value 410 (e.g., 55 Nm) as time additionally passes after the brake release timing 541, it can be seen that the device 100 performs increasing the height value 510 for the working apparatus or boom up according to the obtained demand 500.

The device 100 according to one embodiment may determine a torque increase rate according to a preset torque time compared to a motor torque 400 from a demand occurrence timing. For example, the preset torque time may mean a preset time value for calculating a rate of increase of a motor torque value 400 from a user's selection input, and the torque increase rate may be interpreted as a slope for the motor torque value 400 in FIG. 5. In other words, when a motor torque value (e.g., 30 Nm) is obtained within a preset torque time (e.g., 10 s), the device 100 may determine a torque increase rate (e.g., 3 Nm/s), and by reflecting this, compare the motor torque value 400 with the standby torque value 410 to determine a proximity arrival time (e.g., 10 s) that represents the time it takes for the obtained torque proximity to reach the preset proximity range.

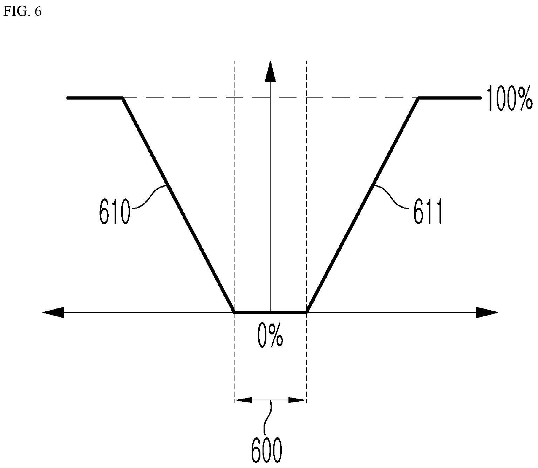

FIG. 6 is a drawing illustrating an example of a dead band range for a joystick which is used for a device 100 to control the movement of one or more working apparatuses included in an excavator according to one embodiment.

The device 100 according to one embodiment may obtain a dead band range indicating unintentional movement of one or more working apparatuses within a range of joystick tilt, and the dead band range 600 may include positive values 611 and negative values 610 for the joystick tilt. Additionally, the brake release timing 541 may be a timing when the joystick tilt does not fall within the dead band range 600. Furthermore, the dead band range 600 may be preset from a user's selection input, and the device 100 may obtain an updated dead band range according to the result value of the analysis unit described below.

Referring to FIG. 6, it can be seen that, when the demand 500 for one or more working apparatuses (e.g., boom 300) is 0, the corresponding joystick tilt can be represented as 0%, and the joystick tilt corresponding to the maximum applied demand 500 can be seen as 100%, which represents the maximum angle. Accordingly, the dead band range 600 (e.g. -5 degrees to 5 degrees) represents a portion of the total joystick tilt. Additionally, the dead band range 600 may include both positive values (e.g., boom up) and negative values 610 (e.g., boom down) for the joystick tilt.

Even if the tilt of the joystick according to one embodiment is within the dead band range 600, the motor torque value 400 according to the demand 500 can be gradually increased. The existing dead band range 600 excludes signaling for the electric motor 320 that provides power to the movement of the excavator even if demand 500 is obtained for a specific range of joystick tilt to prevent demand 500 generated due to unintentional movement of the joystick. However, in the present embodiment, as the motor torque value 400 approaches the standby torque value 410, the device 100 may obtain a motor torque value 400 that is gradually increased according to the obtained demand 500 even if the joystick tilt is included in the dead band range 600 with a technology for preventing sagging due to the self-weight of one or more working apparatuses at the brake release timing 541.

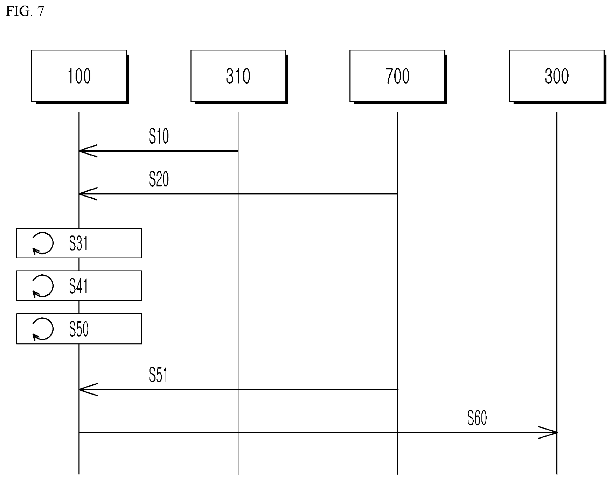

FIG. 7 is a drawing illustrating an example of a process in which a device 100 releases a brake 330 to control one or more working apparatuses according to one embodiment.

Referring to FIG. 7, the device 100 may perform step S10 of obtaining apparatus status information including weight information and position information for one or more working apparatuses (e.g., boom 300) from a sensor included in an actuator 310, and perform step S20 of obtaining a demand 500 for controlling an electric motor 320 according to a joystick intensity signal determined according to a joystick tilt according to a movement of a joystick 700. The device 100 determines a motor torque value 400 according to the amount of current applied to the electric motor 320 from the demand 500 at step S31, and at step S41, calculates an average value based on a history of past standby torque values indicating standby torque values 410 used in the past to determine a current standby torque value. Next, if the comparison result of the gradually increasing motor torque value 400 and the standby torque value 410 indicates that the brake can be released, the device 100 may perform step S50 of determining the brake release timing 541. However, at step S51, the device 100 may monitor whether the joystick tilt is within a dead band range 600 indicating unintentional movement of the boom 300, and determine the brake release timing 541 at a time when the joystick tilt is not within the dead band range 600. After the brake release timing 541, the device 100 may control the boom 300 according to the demand 500 by releasing the brake 330 based on the brake release timing 541.

As an effect of this, if the joystick tilt is included in the dead band range 600, it is determined that it is an unintentional demand from the user, and thus indiscriminate falling and sagging of one or more working apparatuses that occurs when the brake 330 is released can be prevented. In other words, even if the comparison result indicating that the brake can be released is obtained by performing the comparison of the motor torque value 400 with the standby torque value 410, the device 100 may determine a more precise brake release timing 541 by additionally determining the brake release timing 541 while the joystick tilt is included in the dead band range 600.

The device 100 according to one embodiment may determine a standby tilt torque value according to the tilt of the upper body of the excavator. In other words, the standby tilt torque value may mean a value greater than the standby torque value 410, and may be interpreted as a situation in which a greater motor torque value 400 is required to maintain the current position state of one or more working apparatuses (e.g., boom 300) according to the tilt with respect to the upper body. In other words, the device 100 may obtain the apparatus status information by further including the angle value for the upper body, and the standby tilt torque value may be determined differently depending on the tilt of the upper body. Accordingly, when the torque proximity, which indicates how close to the gradually increasing motor torque value 400 and the standby slope torque value, is included in the preset proximity range, the device 100 can determine the brake release timing 541 for releasing the brake 330 that restricts the movement of the boom 300 as the comparison result indicates that the brake can be released.

As an effect of this, if the tilt of the upper body of the excavator changes, the torque value required to maintain the center of gravity and current position of the excavator stopped on flat ground may be different. Accordingly, since the standby tilt torque value is determined according to the tilt of the upper body, even if the area where the excavator is located is an area with a high incline, the device 100 can minimize falling and prevention of the working apparatus by releasing the brake 330 only when the motor torque value 400 is close to the standby tilt torque value.

The device 100 according to an embodiment may determine an updated dead band range (e.g., -3 degrees to +3 degrees) that is narrower than the dead band range 600 (e.g., -5 degrees to +5 degrees) when the obtained demand 500 is greater than or equal to 0 and a dead band duration (e.g., 3 minutes) indicating a time during which the joystick tilt is included in the dead band range 600 has elapsed longer than a preset duration (e.g., 2 minutes). Interpretativly, it can be interpreted as a situation where demand 500 is continuously obtained based on a joystick intensity signal determined by the joystick tilt, but the brake release timing 541 is delayed because the joystick tilt is included in the dead band range 600 for a certain period of time or longer. Accordingly, the device 100, when the dead band duration has elapsed longer than the preset duration, may determine an updated dead band range that is narrower than the existing dead band range based on a past dead band range determined in the past.

As an effect of this, although the proximity to the motor torque value 400 and the standby torque value 410 is included in the preset proximity range and the comparison result is determined that the brake can be released, since the joystick tilt is included in the dead band range 600 for a certain time or longer, an error in which the brake release timing 541 is delayed can be prevented.

As another example, the device 100 may further obtain a brake response section representing the section from the brake release timing obtained with respect to the brake to the actual brake release timing. In the examples described below, it is assumed that the first brake has a shorter brake response time than the second brake.

For example, when the first brake is used, even if the comparison result of the obtained motor torque value 400 and the standby torque value 410 determines that the brake can be released, the device 100 may determine the time when the joystick tilt falls outside the dead band range 600 as the brake release timing 541.

For example, when the second brake is used, even if the joystick tilt falls within the dead band range 600, the device 100 may determine the time at which the comparison result of the obtained motor torque value 400 and the standby torque value 410 determines that the brake can be released as the brake release timing 541.

As an effect of this, depending on the type of brake used, the first brake with a short brake response section may mean that there is no delay from the determined brake release timing 541 to the actual brake release timing, thereby enabling immediate control of one or more working apparatuses by determining the brake release timing 541 when the joystick tilt falls outside the dead band range 600. On the other hand, for the case of the second brake, in which there is a delay, in order to minimize the delay, even if the joystick tilt is included in the dead band range 600, actual brake release is possible since the comparison result of the motor torque value 400 with the standby torque value 410 indicates that the brake can be released. Therefore, the brake release timing 541 can be efficiently determined according to the brake response section for the brake, thereby minimizing the sagging of the working apparatus.

Referring to step S60, the device 100 according to one embodiment releases the brake 330 based on the brake release timing 541 to control one or more working apparatuses according to the demand 500.

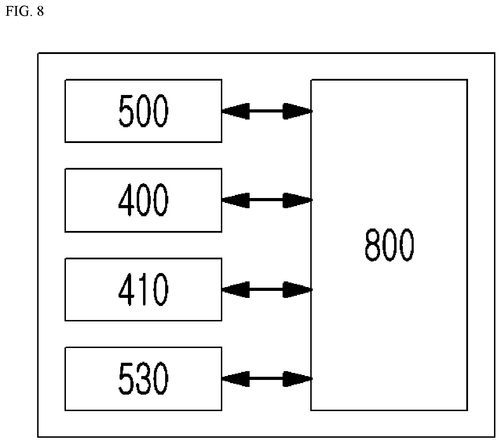

FIG. 8 is a drawing illustrating an example in which an analysis unit 800 included in a device 100 performs analysis using demand 500, the number of revolutions 510 of an electric motor, standby torque value 410, and height value 530 for a working apparatus according to one embodiment.

Referring to FIG. 8, the device 100 may obtain demand 500, the number of revolutions 510 of an electric motor, standby torque value 410, and height value 530 for a working apparatus obtained over time from a database, perform analysis in an analysis unit 800, and update each value. Accordingly, the device 100 may obtain an updated dead band range for the joystick tilt and an updated standby torque value from the analysis unit 800 with the updated result value.

As an effect of this, the standby torque value 410 and the most suitable dead band range 600 corresponding to the continuously obtained demand 500, the number of revolutions 510 of the electric motor, the standby torque value 410 and the height value are updated, so that the device 100 may determine a precise brake release timing 541 over time to control the working apparatus.

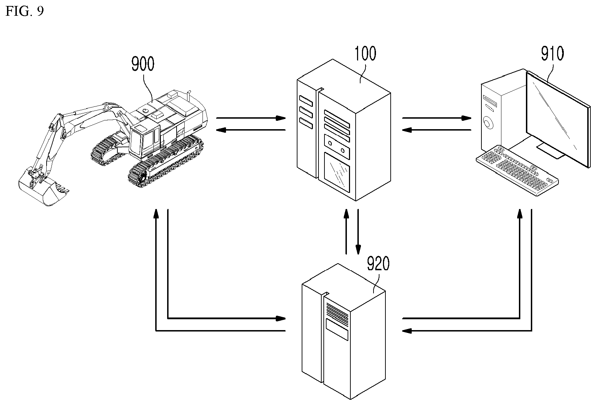

FIG. 9 is a drawing illustrating an example of a process in which a device 100 provides a user device 910 with a process for controlling a brake 330 included in an excavator 900 according to one embodiment.

Referring to FIG. 9, the device 100 may obtain apparatus status information including weight information and position information for one or more working apparatuses including at least one of a boom 300, an arm, and a bucket from an excavator 900 and save the same in a database 920. Additionally, the device 100 may obtain a demand 500 that controls an electric motor 320 that provides power to the movement of one or more working apparatuses from the excavator 900. Additionally, the device 100 may determine a motor torque value 400 for the electric motor 320 as a demand 500 is obtained and send the determined motor torque value 400 to the user device 910 in real time. In addition, the device 100 may use the apparatus status information to determine a standby torque value 410 required for one or more working apparatuses to maintain the current position status, save this in a database 920, and obtain an updated standby torque value 410 by the analysis result. Additionally, the device 100 may determine a brake release timing 541 for releasing a brake that restricts movement of one or more working apparatuses based on a comparison result between a motor torque value 400 and a standby torque value 410, and may remotely obtain a direct brake release timing 541 from a selection input of a user device 910. Additionally, the device 100 may release the brake 330 based on the brake release timing 541 to remotely control one or more working apparatuses according to a demand 500 obtained from the user device 910.

Various embodiments of the present disclosure may be implemented as software including one or more instructions saved in a storage medium (e.g., a memory) readable by a machine (e.g., a display apparatus or a computer). For example, a processor of the machine (e.g., processor 120) may call at least one instruction from one or more instructions saved from a storage medium and execute it. This enables the machine to be operated to perform at least one function in accordance with at least one instruction called above. The one or more instructions may include codes generated by a compiler or codes executable by an interpreter. The machine-readable storage medium may be provided in the form of a non-transitory storage medium. Here, 'non-transitory' simply means that the storage medium is a tangible apparatus and does not contain signals (e.g. electromagnetic waves), and the term does not distinguish between cases where data is saved semi-permanently or temporarily on the storage medium.

According to an embodiment, the methods according to various embodiments disclosed in the present disclosure may be provided as included in a computer program product. The computer program product may be traded between sellers and buyers as a commodity. The computer program product may be distributed in the form of a machine-readable storage medium (e.g., a compact disc read only memory (CD-ROM)), or may be distributed online (e.g., by downloading or uploading) via an application store (e.g., Play StoreTM) or directly between two user apparatuses (e.g., smartphones). In the case of online distribution, at least a portion of the computer program product may be temporarily saved or temporarily created in a machine-readable storage medium, such as the memory of a manufacturer's server, an application store's server, or an intermediary server.

A person skilled in the art related to the present embodiment will understand that the above-described description can be implemented in a modified form without departing from the essential characteristics thereof. Therefore, the disclosed methods should be considered from an explanatory rather than a restrictive perspective. The scope of the present invention is indicated by the claims, not the foregoing description, and all differences within the scope equivalent thereto should be construed as being included in the present invention.

### DESCRIPTION OF THE NUMERAL REFERENCES

| | | | |
|---|---|---|---|
| 100: | Device | | |
| 110: | Receiving unit | 120: | Processor |
| 130: | Control Unit | | |
| 300: | Boom | | |
| 310: | Actuator | 320: | Electric Motor |
| 330: | Brake | | |
| 400: | Motor torque value | 410: | Standby torque value |
| 420: | Angle of working apparatus | | |
| 500: | Demand | 510: | Number of revolutions of electric motor |
| 530: | Height value for working apparatus | | |
| 540: | Demand occurrence timing | | |
| 541: | Brake release timing | | |
| 542: | Torque formation timing | | |
| 600: | Dead band range | | |
| 610: | Negative value for joystick tilt | | |
| 611: | Positive value for joystick tilt | | |
| 700: | Joystick | | |
| 800: | Analysis unit | 900: | Excavator |
| 910: | User Device | 920: | Database |

## Claims

1. A method for controlling a brake included in an excavator, comprising:
obtaining, by a receiving unit, apparatus status information including weight information and position information for one or more working apparatuses including at least one of a boom, an arm and a bucket included in an excavator;
obtaining, by the receiving unit, a demand to control an electric motor that provides power to the movement of the one or more working apparatuses;
determining, by a processor, a motor torque value for the electric motor as the demand is obtained;
determining, by the processor, a standby torque value required for the one or more working apparatuses to maintain current position state by using the apparatus status information;
determining, by the processor, a brake release timing for releasing a brake that restricts movement of the one or more working apparatuses based on a comparison result of the motor torque value and the standby torque value; and
controlling, by a control unit, the one or more working apparatuses according to the demand by releasing the brake based on the brake release timing.

2. The method of claim 1,
wherein the electric motor and the brake are included in an EMA (Electro Mechanical Actuator) that performs conversion of rotary motion into linear motion,
wherein the type of the EMA is any one of a screw type or a rack and pinion type.

3. The method of claim 1,
wherein the obtaining the demand comprises:
obtaining a joystick intensity signal determined according to a joystick tilt for a joystick for controlling movement of the one or more working apparatuses; and
obtaining the demand for controlling the electric motor according to the joystick intensity signal.

4. The method of claim 3,
further comprising obtaining a demand occurrence timing representing a time at which the demand is occurred as the demand is obtained;
wherein the demand occurrence timing is a time when the brake is restricting movement of the one or more working apparatuses.

5. The method of claim 4,
wherein the determining the motor torque value comprises:
determining the motor torque value in proportion to the amount of current applied to the electric motor by the demand from the time of occurrence of the demand,
wherein number of revolutions of the electric motor is maintained at 0 while the motor torque value increases between the time when the demand is occurred and the time when the brake is released.

6. The method of claim 1,
wherein the determining the standby torque value comprises:
obtaining current position information corresponding to the current position state of the one or more working apparatuses; and
determining the standby torque value based on the current position information and the weight information,
wherein the current position information comprises center of gravity information of the one or more working apparatuses.

7. The method of claim 5,
wherein the comparison result is
determined based on whether a torque proximity, which indicates how close the motor torque value is to the standby torque value, falls within a preset proximity range,
wherein the brake release timing is determined when the comparison result indicates that the brake can be released.

8. The method of claim 7,
wherein the determining the brake release timing comprises:
obtaining a dead band range indicating unintentional movement of the one or more working apparatuses within the range of the joystick tilt,
wherein the dead band range comprises positive and negative values for the joystick tilt.

9. The method of claim 8,
wherein the brake release timing is a time when the joystick tilt is not included in the dead band range.

10. The method of claim 8,
wherein the motor torque value according to the demand is increased even if the joystick tilt is included in the dead band range.

11. A device for controlling a brake included in an excavator, comprising:
a receiving unit for obtaining apparatus status information including weight information and position information for one or more working apparatuses including at least one of a boom, an arm and a bucket included in an excavator, and for obtaining a demand to control an electric motor that provides power to movement of the one or more working apparatuses;
a processor for determining a motor torque value for the electric motor as the demand is obtained, for determining a standby torque value required for the one or more working apparatuses to maintain current position state by using the apparatus status information, and for determining a brake release timing for releasing a brake that restricts movement of the one or more working apparatuses based on a comparison result of the motor torque value and the standby torque value; and
a control unit for controlling the one or more working apparatuses according to the demand by releasing the brake based on the brake release timing.

12. A computer-readable recording medium on which a program for executing the method of claim 1 on a computer is recorded.

13. A computer program comprising program codes for performing the method of claim 1.
